# EUROPÄISCHE PATENTSCHRIFT

(11) **EP 0 421 225 B1**
(45) Veröffentlichungstag und Bekanntmachung des Hinweises auf die Patenterteilung: **05.04.1995**
(21) Anmeldenummer: 90118275.8
(22) Anmeldetag: 24.09.1990
(51) Int. Cl.: C07F 9/535

(54) **Verfahren zur Herstellung von alpha-Chlor-phosphoryliden**
Process for preparing alpha chloro phosphorylidene
Procédé de préparation d'alpha-chloro-phosphorylidène

(30) Priorität: 30.09.1989 DE 3932748
(43) Veröffentlichungstag der Anmeldung: 10.04.1991
(73) Patentinhaber: BASF Aktiengesellschaft, 67063 Ludwigshafen (DE)
(72) Erfinder: Schaefer, Bernd, Dr., D-6749 Dierbach (DE)

(56) Entgegenhaltungen:
- THE JOURNAL OF ORGANIC CHEMISTRY, Band 27, 12. März 1962, Seiten 998-1000, TheAmerican Chemical Society; D.B. DENNEY et al.: "The preparation and reactionsof some halophosphoranes"
- SYNTHESIS, Band 11, November 1970, Seiten 590-591; H.J. BESTMANN et al.: "Eineeinfache Methode zur Herstellung von alpha-Chlor-acylmethylen- und alpha-Chlor-alkoxycarbonylmethylen-phosphoranen"

## Beschreibung

Die vorliegende Erfindung betrifft ein neues Verfahren zur Herstellung von α-Chlor-phosphoryliden der allgemeinen Formel I 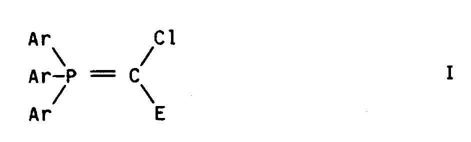
in der die Reste Ar gleiche oder verschiedene Arylgruppen bedeuten und E für einen das Ylid (I) stabilisierenden Substituenten steht, durch Umsetzung eines Phosphoniumsalzes der allgemeinen Formel II 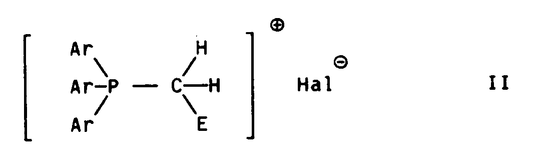
in welcher Hal Chlor, Brom oder Iod bedeutet, mit einem Chlorierungsmittel.

Aus der Arbeit von Märkl (Chem. Ber., Band 95 (1962), Seite 3003) ist es bekannt, daß man Phosphoniumsalze vom Typ der Verbindungen II mit Chlor oder vorzugsweise mit Phenyliodidchlorid zu den entsprechenden Chloryliden I umsetzen kann.

Ein ähnliches Verfahren, bei welchem als Chlorierungsmittel N-Chlor-4-toluolsulfonamid-Natrium (Chloramin T) dient, wird von Bestmann et al. (Synthesis, (1970), Seite 590) beschrieben.

Denney et al. (J. Org. Chem., Band 27 (1962), Seite 998) schlagen für die gleiche Reaktion die Chlorierung mit Chlor, vorzugsweise in Gegenwart eines tertiären Amins, sowie mit tert.-Butylhypochlorit vor, wobei das letztgenannte Reagens als wenig befriedigend bezeichnet wird.

Da diese Chlorierungsmittel entweder verhältnismäßig teuer sind, unzureichende Ausbeuten liefern oder wie Chlorgas verfahrenstechnische Probleme bedingen, lag der Erfindung eine einfachere und wirtschaftlichere Chlorierung von II zu I als Aufgabe zugrunde.

Demgemäß wurde ein Verfahren zur Herstellung von α-Chlor-phosphoryliden der allgemeinen Formel I 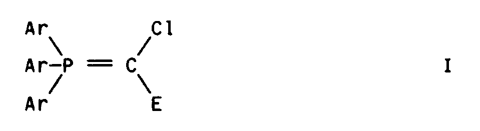
in der die Reste Ar gleiche oder verschiedene Arylgruppen bedeuten und E für einen das Ylid (I) stabilisierenden Substituenten steht, durch Umsetzung eines Phosphoniumsalzes der allgemeinen Formel II 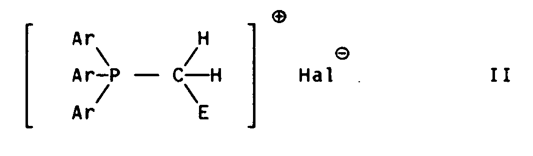
in welcher Hal Chlor, Brom oder Iod bedeutet, mit einem Chlorierungsmittel gefunden, welches dadurch gekennzeichnet ist, daß man als Chlorierungsmittel Chlorkalk verwendet.

Die erfindungsgemäße Chlorierung läßt sich allgemein auf solche Ausgangsverbindungen II anwenden, in denen der Rest E für einen das Ylid (I) stabilisierenden Substituenten steht, d.h. für eine Gruppe, welche befähigt ist, die partiell negative Ladung am α-Kohlenstoffatom des Ylids (I) durch Delokalisation auf Resonanzstrukturen zu stabilisieren (Manfred Schlosser, in "Topics in Stereochemistry", Ed. E.L. Eliel und N.L. Allinger, Wiley Interscience, (1970), Band 5, Seite 1).

Derartige Reste sind vor allem die Cyanogruppe sowie alle Gruppen, die über eine Carbonylgruppe, eine Sulfonylgruppe oder eine Arylgruppe mit dem α-Atom des Phosphoniumsalzes verbunden sind.

Im einzelnen werden hierbei folgende Reste besonders bevorzugt:
- Carbonamidogruppen 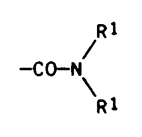 in denen die Reste R¹ gleich oder verschieden sein können und Wasserstoff, C₁-C₆-Alkylgruppen wie die Methyl- und die Ethylgruppe, C₅-C₆-Cycloalkylgruppen oder Arylgruppen, bedeuten.
- Gruppen (-CO-R²)
   in der R² für einen der Reste R¹, die Hydroxylgruppe, eine C₁-C₆-Alkoxygruppe wie die Ethoxygruppe oder eine Aryloxygruppe steht,
- Gruppen -SO₂-R² sowie
- die Phenylgruppe.

Das erfindungsgemäße Verfahren ist nach den bisherigen Beobachtungen nicht von der Art der Arylsubstituenten (Ar) abhängig, so daß man grundsätzlich von Yliden beliebiger tertiärer Phosphine ausgehen kann.

Besonders bevorzugt sind Phenylreste sowie Phenylreste, die bis zu 3 Substituenten tragen, wobei als Substituenten Fluor, Chlor und Brom sowie C₁-C₁₀-Alkylgruppen und C₁-C₄-Alkoxygruppen hervorgehoben seien.

Beispiele für bevorzugte Ausgangsverbindungen II sind:
Acetylmethyltriphenylphosphoniumchlorid
Cyanomethyltriphenylphosphoniumchlorid
Methoxycarbonylmethyltriphenylphosphoniumchlorid
Ethoxycarbonylmethyltriphenylphosphoniumchlorid und
Ethoxysulfonylmethyltriphenylphosphoniumchlorid.

Die Phosphoniumsalze II sind bekannt oder in bekannter Weise durch Quaternierung von Triarylphosphinen PAr₃ mit Verbindungen E-CH₂X zugänglich, wobei X für eine anionische Abgangsgruppe wie Chlor, Brom oder Iod steht.

Bei dem erfindungsgemäß als Chlorierungsmittel zu verwendenden Chlorkalk handelt es sich bekanntlich um ein handelsübliches Mischsalz des Calciums der ungefähren Zusammensetzung

3 Ca Cl (OCl) · Ca (OH)₂ · 5 H₂O

welches man aus Chlor und Calciumhydroxid erhält. Wesentlich für die chlorierende Wirkung sind die Hypochlorit-Ionen, deren Anteil dem "aktiven Chlor" entspricht und der je nach Chlorierungsgrad des Calciumhydroxids auch geringer sein kann als gemäß obiger Formel.

Vorzugsweise nimmt man die Umsetzung in Gegenwart eines Lösungsmittels vor, in welchem sich das Phosphoniumsalz II mindestens teilweise und das Verfahrensprodukt I gänzlich lösen.

Als Lösungsmittel, die in Mengen von etwa 0,3 bis 2, vorzugsweise 0,5 bis 1,5 l pro mol II verwendet werden, kommen insbesondere halogenierte Kohlenwasserstoffe wie Dichlormethan oder Chloroform, Ether wie Diethylether oder Tetrahydrofuran, Ester wie Essigsäureethylester, aliphatische und aromatische Kohlenwasserstoffe wie Hexan, Cyclohexan, Benzol und Toluol, und besonders bevorzugt Alkohole wie Methanol und Ethanol sowie Ketone wie Aceton in Betracht. Die Gegenwart von geringen Mengen Wasser stört den Reaktionsablauf nicht.

Es empfiehlt sich, eine Lösung von II vorzulegen und hierzu portionsweise den Chlorkalk zu geben. Da das Hypochlorit, also das "aktive Chlor", bei äquimolarem Einsatz meistens nur zu 75 % umgesetzt wird, kann man die Restmengen mit einer Säure, vorzugsweise Salzsäure, zur Vervollständigung der Reaktion als Chlor freisetzen.

Die Reaktionstemperatur hängt von der Reaktivität des Phosphoniumsalzes ab, liegt im allgemeinen aber zwischen (-10) und 120°C. In der Regel arbeitet man bei (-10) bis 60, vorzugsweise bei 0 bis 30°C.

Nach beendeter Chlorierung trennt man die organische Phase von den Feststoffen und, falls eine wäßrige Säure mitverwendet wurde, von der wäßrigen Phase ab. Die organische Phase kann wie üblich auf die Verfahrensprodukte I aufgearbeitet oder unmittelbar für weitere Umsetzungen verwendet werden.

Die Phosphorylide I sind bekanntermaßen wertvolle Zwischenprodukte für organische Synthesen, vor allem zur Herstellung von herbicid wirksamen α-Chlorzimtsäurederivaten wie
N-[3-(α-Chloracrylsäureethylester)-4-chlorphenyl]-3,4,5,6-tetrahydrophthalimid oder
N-[5-(α-Chloracrylsäureethylester)-4-chlor-2-fluorphenyl]-3,4,5,6-tetrahydrophthalimid.

### Beispiele 1 bis 3

### Herstellung von α-Chlorphosphoryliden Ph₃≡P=C(Cl)-E

Zu einer Lösung aus 50 mmol eines Triphenylphosphoniumchlorides (II) [Ph₃≡P-CH₂-E]^{⊕}Cl^{⊖} und 50 ml Ethanol wurde bei 20 bis 25°C eine 75 mmol (Bsp. 3: 50 mmol) "aktives Chlor" enthaltende Menge Chlorkalk innerhalb von 45 min portionsweise zugegeben. Anschließend wurde das Reaktionsgemisch
mit 45 ml wäßriger-ethanolischer Salzsäure versetzt, deren Chlorwasserstoffanteil 90 mmol betrug, und noch 1 h bei 20 bis 25°C gerührt. Die übliche Aufarbeitung lieferte die Ylide I in folgenden Ausbeuten:

| Bsp. | E | Ausbeute [%] |
|---|---|---|
| 1 | -COCH₃ | 100 |
| 2 | -CN | 74 |
| 3 | -CO₂CH₂CH₃ | 80 |

## Patentansprüche

1. Verfahren zur Herstellung von α-Chlor-phosphoryliden der allgemeinen Formel I 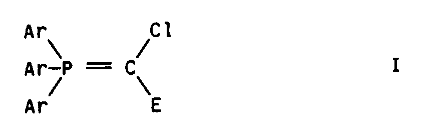 in der die Reste Ar gleiche oder verschiedene Arylgruppen bedeuten und E für einen das Ylid (I) stabilisierenden Substituenten steht, durch Umsetzung eines Phosphoniumsalzes der allgemeinen Formel II 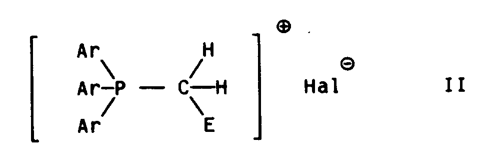 in welcher Hal Chlor, Brom oder Iod bedeutet, mit einem Chlorierungsmittel, dadurch gekennzeichnet, daß man als Chlorierungsmittel Chlorkalk verwendet.

2. Verfahren nach Anspruch 1, dadurch gekennzeichnet, daß man es zur Herstellung solcher Verbindungen I anwendet, in denen der Substituent E folgende Bedeutung hat:
- die Cyangruppe
- eine Amidgruppe (-CO-N(R¹)₂), in der die Reste R¹ gleich oder verschieden sein können und für Wasserstoff, C₁-C₆-Alkylgruppen, C₅-C₆-Cycloalkylgruppen oder Arylgruppen stehen
- eine Gruppe (-CO-R²), in der R² für einen der Reste R¹, die Hydroxylgruppe eine C₁-C₆-Alkoxygruppe oder eine Aryloxygruppe steht,
- eine Gruppe (-SO₂-R²) oder
- die Phenylgruppe.

## Claims

1. A process for preparing α-chloro phosphorus ylides of the formula (I) 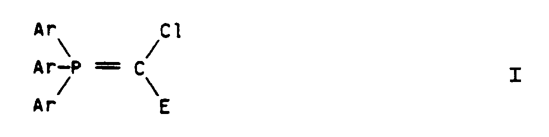 where the Ar radicals are identical or different aryl groups, and E is a substituent which stabilizes the ylide (I), by reacting a phosphonium salt of the formula II 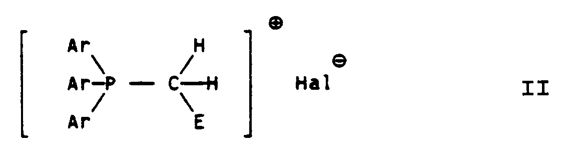 where Hal is chlorine, bromine or iodine, with a chlorinating agent, which comprises using bleaching powder as chlorinating agent.

2. A process as claimed in claim 1, which is used to prepare compounds I in which the substituent E has the following meanings:
- cyano
- an amide group (-CO-N(R¹)₂), where the R¹ radicals can be identical or different and are each hydrogen, C₁-C₆-alkyl, C₅-C₆-cycloalkyl or aryl
- -CO-R² where R² is one of the R¹ radicals, hydroxyl, C₁-C₆-alkoxy or aryloxy
- -SO₂-R² or
- phenyl.

## Revendications

1. Procédé de préparation de α-chloro-phosphorylides de la formule générale I 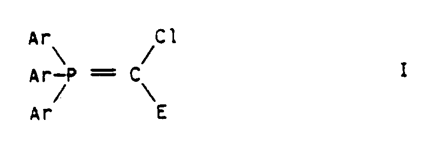 dans laquelle les restes Ar représentent des groupes aryle identiques ou différents et E est mis pour un substituant stabilisant l'ylide (I), par réaction d'un sel de phosphonium de la formule générale II 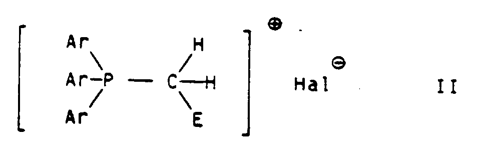 dans laquelle Hal représente chlore, brome ou iode, avec un agent chlorant, caractérisé par le fait que l'on utilise, comme agent chlorant, du chlorure de chaux.

2. Procédé selon la revendication 1, caractérisé par le fait que, pour la préparation, on utilise des composés I dans lesquels le substituant E a la signification suivante :
- le groupe cyano,
- un groupe amide (-CO-N(R¹)₂), dans lequel les restes R¹ peuvent être identiques ou différents et sont mis pour hydrogène, groupes alkyle en C1-C6, groupes cycloalkyle en C5-C6 ou groupes aryle,
- un groupe (-CO-R²), dans lequel R² est mis pour un des restes R¹, le groupe hydroxyle, un groupe alcoxy en C1-C6 ou un groupe aryloxy,
- un groupe (-SO₂-R²) ou
- le groupe phényle.
